# FASCICULE DE BREVET EUROPEEN

(11) **EP 4 031 847 B1**
(45) Date de publication et mention de la délivrance du brevet: **26.07.2023**
(21) Numéro de dépôt: 20804614.4
(22) Date de dépôt: 20.10.2020
(51) Int. Cl.: G01M 3/32, G01M 3/28, B01L 1/02, B60J 10/00

(54) **DISPOSITIF DE TEST D'ETANCHEITE POUR SYSTEME DE TRANSFERT A DOUBLE PORTE**
DICHTUNGSPRÜFVORRICHTUNG FÜR DOPPELTÜRÜBERTRAGUNGSSYSTEM
SEALING TEST DEVICE FOR DOUBLE-DOOR TRANSFER SYSTEM

(30) Priorité: 25.10.2019 FR 1911997
(43) Date de publication de la demande: 27.07.2022
(73) Titulaire: Getinge Life Science France, 41100 Vendôme (FR)
(72) Inventeur: PAPIN, Didier, 41100 SELOMMES (FR)
(74) Mandataire: Brevalex
(86) Numéro de dépôt international: PCT/FR2020/051884
(87) Numéro de publication internationale: WO 2021/079053

(56) Documents cités:
- EP-A1- 0 460 511
- CH-A- 427 347
- DE-A1- 3 126 089
- FR-A1- 2 640 376
- FR-A1- 2 787 190
- US-A- 3 400 580
- US-A- 3 875 790
- US-A- 5 756 882

## Description

### DOMAINE TECHNIQUE ET ÉTAT DE LA TECHNIQUE ANTÉRIEURE

La présente invention se rapporte à un dispositif de test d'étanchéité pour système de transfert à double porte à fiabilité augmentée.

Dans un certain nombre de secteurs industriels, parmi lesquels on citera les secteurs nucléaire, médical, pharmaceutique et agroalimentaire, il est nécessaire ou souhaitable d'effectuer certaines tâches dans une atmosphère confinée, soit afin de protéger l'environnement, par exemple de la radioactivité, de la toxicité..., soit au contraire de pouvoir effectuer ces tâches dans une atmosphère aseptique ou exempte de poussière, soit enfin les deux simultanément.

Le transfert d'appareils ou de produits d'un volume clos à l'autre, sans qu'à aucun moment l'étanchéité de chacun de ces volumes vis-à-vis de l'extérieur ne soit rompue, pose un problème délicat à résoudre. Ce problème peut être résolu par un dispositif de connexion à double porte.

Un tel dispositif à double porte muni d'une commande à multiple sécurités est par exemple connu du document FR 2 695 343. Chaque volume est clos par une porte montée dans une bride. Chaque porte est solidarisée à sa bride par une liaison baïonnette et les deux brides sont destinées à être solidarisés l'une à l'autre par une liaison baïonnette.

Par exemple l'un des volumes clos est formé par un isolateur et l'autre volume est formé par un conteneur.

Classiquement la partie de connexion portée par l'isolateur est désignée partie alpha et la partie de connexion portée par le conteneur est désignée partie bêta.

Avant la connexion des deux volumes clos, on souhaite vérifier que chaque volume respecte les critères d'étanchéité afin d'éviter tout risque de contamination intérieure ou extérieure lors de la connexion des deux volumes clos.

Une technique utilisée pour vérifier l'étanchéité de chaque volume clos met en oeuvre un dispositif comportant une cavité dont l'ouverture est bordée par un joint torique fin et relativement rigide, le joint étant destiné à être appliqué contre une surface fine de la bride de la partie alpha ou de la partie bêta, afin de définir avec elle un volume de test, dont on teste l'étanchéité par rapport au volume intérieur du conteneur ou de l'isolateur. Par exemple on génère un niveau de pression donné dans le volume et on vérifie si celui-ci est stable au cours du temps.

Le dispositif est fixé sur la partie alpha ou la partie bêta par exemple au moyen de vis, de sorte à presser le joint contre la surface de la partie alpha ou la partie bêta.

La surface de la partie bêta ou alpha contre laquelle le joint est destiné à venir en contact et assurer l'étanchéité du volume de test avec l'extérieur est exposée aux chocs lors des manipulations. Les risques de détérioration de cette surface sont donc importants, et l'étanchéité du volume de test avec l'extérieur peut être empêchée, ce qui entraîne un résultat au test d'étanchéité négatif qui serait faux du fait de l'absence d'étanchéité entre le joint et la surface. Or la faible taille du joint torique et sa rigidité peuvent ne pas permettre d'absorber la détérioration de la surface.

Un système de test d'étanchéité d'un système de transfert à double porte entre deux volumes clos est décrit dans FR2787190 A1.

### EXPOSÉ DE L'INVENTION

C'est par conséquent un but de la présente invention d'offrir un dispositif de test d'étanchéité d'au moins une partie d'un système de connexion à double porte présentant un fonctionnement fiable.

Le but énoncé ci-dessus est atteint par un dispositif de test d'étanchéité qui comporte une cavité munie d'une ouverture bordée par un joint gonflable, et des moyens de fixation dudit dispositif sur la partie à tester.

Le dispositif est monté sur la partie à tester et le joint est gonflé de sorte à venir en contact avec la surface d'étanchéité de la partie à tester. La mise en oeuvre d'un joint gonflable permet d'absorber les détériorations subies par la surface d'étanchéité. En effet il offre une grande souplesse et peut ainsi épouser les défauts de la surface.

En outre, dans le cas où la fixation du dispositif sur la partie à tester est obtenue par un système à baïonnette, la mise en oeuvre d'un joint gonflable présente l'avantage de réduire les frottements et facilite la connexion. En outre le joint ne risque pas d'être détérioré lors de la fixation.

De manière très avantageuse, les moyens de fixation utilisent les moyens mis en oeuvre pour verrouiller les brides des deux volumes clos l'une avec l'autre, par exemple les moyens de verrouillage à baïonnette ou à levier. La fixation est facilitée et évite l'utilisation de moyens distincts, par exemple de vis.

Le dispositif de test est adapté pour vérifier les deux volumes clos.

La présente invention a alors pour objet un dispositif de test d'étanchéité d'au moins une partie d'un système de transfert étanche à double porte entre deux volumes clos, ledit système comprenant de première et deuxième brides aptes à être solidarisées l'une à l'autre, et des première et deuxième portes obturant normalement des ouvertures délimitées respectivement par la première et la deuxième brides, ledit dispositif comportant un boîtier comprenant une cavité munie d'une ouverture, des moyens de connexion mécanique à au moins l'une des première et deuxième brides de sorte que la cavité soit fermée par l'une des première et deuxième brides et l'une des première et deuxième portes, et un joint gonflable destiné à venir, à l'état gonflé, en contact avec l'une des première et deuxième brides et à assurer une étanchéité permettant de vérifier l'étanchéité entre la première bride et la première porte ou la deuxième bride et la deuxième porte.

De manière avantageuse, le dispositif comporte des moyens pour gonfler le joint gonflable et des moyens pour contrôler la pression dans la cavité. Le dispositif peut avantageusement comporter un pressostat pour surveiller la pression dans le joint gonflable.

Par exemple, le boîtier comporte une gorge bordant l'ouverture de la cavité et recevant le joint gonflable. De préférence le joint gonflable, à l'état dégonflé, est logé entièrement dans la gorge.

Par exemple, les première et deuxième brides du système de transfert comportent des moyens de verrouillage l'une à l'autre, et les moyens de connexion mécanique coopèrent avantageusement avec les moyens de verrouillage de l'une au moins des première et deuxième brides. Ainsi la réalisation du test d'étanchéité ne requiert pas de moyens de connexion supplémentaire.

Les moyens de connexion mécanique sont par exemple de type à baïonnette.

Dans un exemple de réalisation, la gorge débouche dans une face du boîtier de sorte que le joint gonflable, à l'état gonflé, vienne en contact avec une face de la première ou deuxième bride sensiblement parallèle à la face de la première ou deuxième porte.

Dans un autre exemple de réalisation, la gorge débouche dans la cavité du boîtier de sorte que le joint gonflable, à l'état gonflé, vienne en contact avec la périphérie radialement extérieure de la deuxième bride.

Par exemple, la première bride et la première porte sont celles d'un isolateur et la deuxième bride et la deuxième porte sont celles d'un conteneur.

La présente invention a également pour objet un procédé de test d'étanchéité d'au moins une partie d'un système de transfert étanche à double porte entre deux volumes clos mettant en oeuvre un dispositif de test d'étanchéité selon l'invention, ledit procédé comprenant les phases suivantes :
- Connexion mécanique du dispositif de test d'étanchéité sur la première ou deuxième bride.
- Gonflage du joint gonflable à une pression donnée.
- Cycle de contrôle de pression dans la cavité.
- Emission d'un message sur l'étanchéité entre la première bride et la première porte ou la deuxième bride et la deuxième porte.

Le procédé comporte avantageusement une étape de surveillance de la pression dans le joint gonflable pendant toute la durée du test.

### BRÈVE DESCRIPTION DES DESSINS

La présente invention sera mieux comprise sur la base de la description qui va suivre et des dessins en annexe sur lesquels:
La figure 1 est une vue en coupe longitudinale illustrant schématiquement le raccordement d'un conteneur sur une cellule au moyen d'un dispositif de transfert étanche à double porte par des moyens de type baïonnette.
La figure 2A est une vue en coupe longitudinale représentant schématiquement un exemple d'un dispositif de test d'étanchéité avant son montage sur un isolateur, le joint étant à l'état non gonflé.
La figure 2B est une vue en coupe longitudinale représentant schématiquement le dispositif de test d'étanchéité de la figure 2A monté sur l'isolateur, le joint étant à l'état non gonflé.
La figure 2C est une vue en coupe longitudinale représentant schématiquement le dispositif de test d'étanchéité de la figure 2A monté sur l'isolateur, le joint étant à l'état gonflé.
La figure 3A est une vue en coupe longitudinale représentant schématiquement un exemple d'un dispositif de test d'étanchéité avant son montage sur un conteneur, le joint étant à l'état non gonflé.
La figure 3B est une vue en coupe longitudinale représentant schématiquement le dispositif de test d'étanchéité de la figure 3A monté sur un conteneur, le joint étant à l'état non gonflé.
La figure 3C est une vue en coupe longitudinale représentant schématiquement le dispositif de test d'étanchéité de la figure 3A monté sur un conteneur, le joint étant à l'état gonflé.

### EXPOSÉ DÉTAILLÉ DE MODES DE RÉALISATION PARTICULIERS

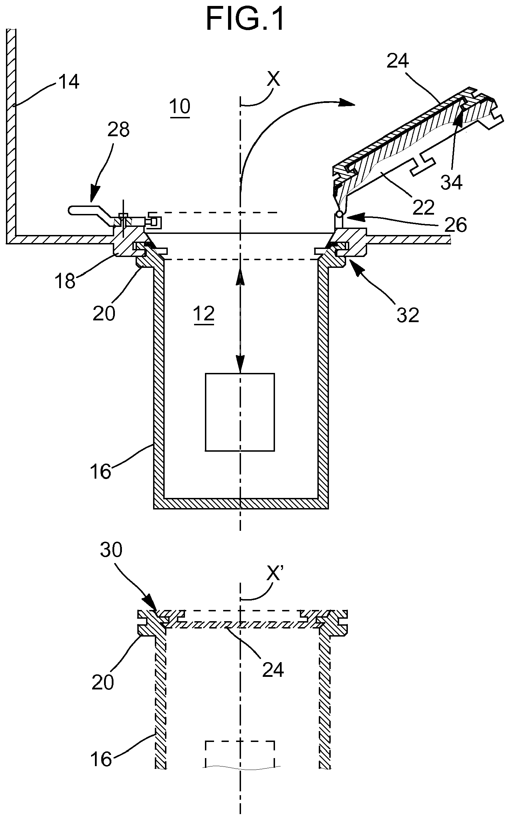

Sur la figure 1, on peut voir une représentation schématique d'un exemple de système de transfert à double porte.

Dans la description qui va suivre les deux volumes clos dont on souhaite tester l'étanchéité avant leur connexion correspondent respectivement à un isolateur 10 et à un conteneur 12. On comprendra cependant que l'invention est aussi applicable dans le cas où les volumes clos seraient de manière non limitative par exemple pour l'un une boîte à gant et pour l'autre un conteneur ou une boîte à gants.

L'isolateur 10 est délimité par une paroi 14 dont une partie seulement est visible sur les figures. Il est équipée, de façon classique, par exemple de moyens de manipulation à distance tels que des télémanipulateurs et/ou des gants (non représentés) solidaires de la paroi 14, grâce auxquels le mécanisme de commande centralisé peut être manoeuvré depuis l'intérieur de cette cellule 10. Le conteneur 12 est également délimité par une paroi 16, comme l'illustre notamment la figure 1.

Le dispositif de transfert étanche à double porte comprend principalement une bride d'isolateur 18, une bride de conteneur 20, une porte d'isolateur 22 obturant normalement une ouverture circulaire délimitée par la bride d'isolateur 18, et une porte de conteneur 24 obturant normalement une ouverture délimitée par la bride de conteneur 20. La bride d'isolateur 18 et la bride de conteneur 20 sont fixées respectivement sur la paroi 14 de la cellule 10 et sur la paroi 16 du conteneur 12. Dans cet exemple, la porte de l'isolateur 22 est articulée sur la bride d'isolateur 18 par une charnière 26.

Des moyens désignés de façon générale par la référence 28, permet de commander l'ouverture et la fermeture des portes 22 et 24.

Par exemple, la fixation de la porte de conteneur 24 sur la bride de conteneur 20 est assurée par une liaison à baïonnette 30 comme cela est décrit dans le document FR 2 695 343. Par exemple, pour permettre la solidarisation de la bride de conteneur 20 sur la bride d'isolateur 18 et la solidarisation de la porte de conteneur 24 sur la porte d'isolateur 22, le système de transfert étanche à double porte comprend également deux autres liaisons à baïonnette désignées respectivement par les références 32 et 34. Les trois liaisons à baïonnette 30, 32 et 34 sont agencées de telle sorte qu'après accostage de la bride de conteneur 20 sur la bride d'isolateur 18, une rotation du conteneur 12 autour de son axe, par exemple dans le sens des aiguilles d'une montre, a pour effet de solidariser la bride de conteneur 20 et la bride d'isolateur 18, de solidariser la porte de conteneur 24 et la porte d'isolateur 22, et de désolidariser la porte de conteneur 24 de la bride de conteneur 20. Ces deux dernières opérations s'effectuent de façon consécutive, de telle sorte que l'ouverture du conteneur n'intervient qu'après que la porte de conteneur 24 ait été solidarisée à la porte d'isolateur 22 pour former une double porte.

L'ensemble formé par la bride d'isolateur et la porte d'isolateur est désigné couramment « partie alpha ». L'ensemble formé par la bride de conteneur et la porte du conteneur est désigné couramment « partie bêta ».

En général le système de transfert à double porte présente une symétrie de révolution autour de l'axe X qui est l'axe de la bride d'isolateur.

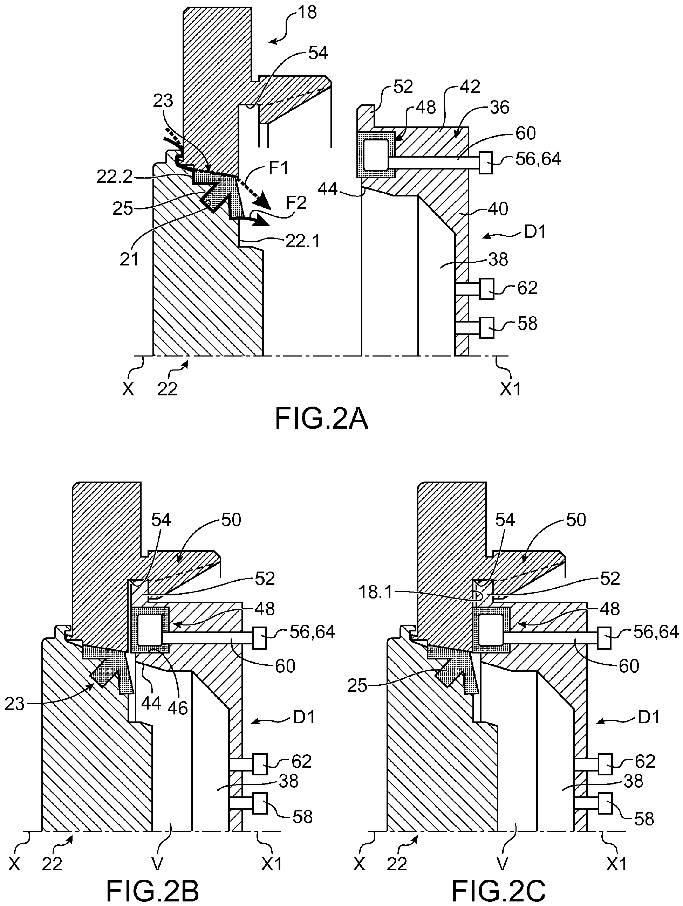

Sur les figures 2A à 2C, on peut voir le dispositif de test d'étanchéité D1 monté sur la partie alpha dans deux états différents.

Sur les figures 2A à 2C, on peut voir en détail la porte 22 de la partie alpha. Elle comporte un joint 23 monté sur la face extérieure 22.1 et sur la périphérie extérieure de la bride 18. Le joint 23 s'étend à la fois sur la face extérieure 22.1 de la porte et sur son bord latéral 22.2. Le joint 23 assure d'une part l'étanchéité entre la porte d'isolateur 22 et la bride d'isolateur 18, et l'étanchéité entre la face extérieure de la porte d'isolateur 22 et la face extérieure de la porte de conteneur 24, isolant ces faces extérieures de l'intérieur des volumes clos.

Le joint 23 est fixé sur la porte d'isolateur 22 au moyen d'un bourrelet annulaire 25 désigné « talon » monté dans une gorge annulaire 21 formée dans la porte d'isolateur 22.

Les fuites potentielles peuvent survenir entre le joint 23 et la bride d'isolateur 18 symbolisées par la flèche F1 ; et entre porte 22 et le joint 23 au niveau du montage du talon 25, symbolisée par la flèche F2.

Le dispositif de test D1 est réalisé pour permettre de détecter les fuites F1 et F2. Le dispositif de test D1 comporte un boitier ou tête 36 délimitant une cavité 38 comportant un fond 40, une paroi latérale 42 et une ouverture 44 à l'opposé du fond. La cavité 38 s'étend selon un axe longitudinal X1.

Le boîtier 36 comporte une gorge 46 entourant l'ouverture 44 et un joint gonflable 48 monté dans la gorge 46. A l'état non gonflé (figures 2A et 2B), le joint gonflable 48 ne fait avantageusement pas saillie de la gorge, réduisant les frottements lors de la connexion du dispositif de test D1 sur la partie alpha. En outre, le joint est protégé. Par exemple, le joint gonflable 48 est collé par sa face opposée à sa face destinée à s'expanser.

Le joint gonflable est par exemple réalisé en élastomère, par exemple en silicone, en styrène butadiène ou SBR (styrene-butadiene rubber en terminologie anglo-saxonne), en EPDM (éthylène-propylène-diène monomère), en fluoropolymère, par exemple en FKM, en nitrile hydrogéné ou HNBR (hydrogenated nitrile butadiène rubber en terminologie anglo-saxonne).

Le diamètre de la cavité est choisi de sorte que le joint gonflable 48, à l'état gonflé, ne vienne pas couvrir les zones de fuite potentielle F1 et F2 de l'isolateur. De de préférence, le boîtier est tel qu'il ne vient pas en contact avec le joint 23. Les dimensions du boîtier sont telles que le bord de la gorge 46 adjacent à l'ouverture 44, autrement dit, la cloison entre la gorge 46 et l'ouverture 44 ne vient pas en contact avec le joint 23. Le positionnement du dispositif de test D1 est assuré par les moyens de fixation, par exemple les moyens de verrouillage à baïonnette ; à l'état connecté le boîtier et notamment le bord intérieur de la gorge 46 est suffisamment court pour ne pas toucher le joint 23.

Le dispositif de test D1 comporte des moyens de connexion mécanique 50 du boîtier 36 sur la partie alpha, notamment du boîtier sur la bride d'isolateur 18 de sorte que le joint 48, à l'état gonflé, soit en contact avec la face extérieure 18.1 de la bride d'isolateur 18.

De manière avantageuse, les moyens de connexion mécanique 50 coopèrent avec les moyens de solidarisation de la bride de conteneur 20 sur la bride d'isolateur 18. Dans l'exemple décrit, il s'agit de moyens à baïonnette. Ainsi les moyens de connexion mécanique 50 sont identiques à ceux portés par la bride de conteneur 20, puisque le dispositif D1 est monté sur la bride en lieu et place du conteneur.

Dans l'exemple représenté sur les figures 2A à 2C, les moyens de connexion mécanique comportent alors des oreilles 52 pénétrant dans une gorge 54 de la bride d'isolateur 18 et verrouillant en translation les deux brides 18, 20.

En variante, les moyens de connexion mécanique peuvent être de type à encliquetage, par vissage...

Le dispositif D1 peut comporter également des moyens 56 pour gonfler le joint gonflable 48.

Les moyens 56 comportent une connexion fluidique 60 entre le joint gonflable 48 et par exemple une pompe pneumatique. De manière très avantageuse, les moyens 56 comportent des moyens de surveillance 64 pour surveiller la pression dans le joint gonflable 48 par rapport à une consigne prédéfinie, permettant de vérifier son état et/ou le montage du dispositif sur la bride d'isolateur 18.

Par exemple les moyens de surveillance 64 comportent un pressostat. Le pressostat contrôle une perte de pression. La consigne prédéfinie correspond à la valeur de pression de gonflage du joint qui a été préalablement fixée. Le pressostat compare la consigne prédéfinie et la mesure réelle de pression du joint. Lorsque cet écart consigne / mesure dépasse un seuil ; par exemple si le joint est percé, le pressostat envoie un signal, par exemple une alarme sous forme de voyant lumineux. Ainsi il est possible de vérifier si la pression reste stable pendant toute la durée du test et que les conditions du test sont valides. Lors du gonflage, le pressostat commande l'arrêt de la pompe quand la pression de gonflage du joint est atteinte.

Le dispositif D1 comporte par exemple une pompe 62 pour générer un certain niveau de pression dans la cavité étanche et des moyens 58 pour surveiller l'évolution du niveau de pression au cours du temps dans la cavité 38 et assurer le test d'étanchéité, associés à des moyens pour informer l'opérateur de l'évolution de la pression sous la forme d'un écran ou d'un signal lumineux dont la couleur varie suivant qu'une fuite a été détectée ou non.

Le fonctionnement du dispositif de test d'étanchéité va maintenant être décrit.

Le dispositif de test D1 est tout d'abord rapproché de la partie alpha (figure 2A), puis est solidarisé à la partie alpha (figure 2B), le joint gonflable 48 est à l'état dégonflé. Pour cela les moyens de connexion mécanique 50 coopèrent avec la bride d'isolateur 18. Dans cet exemple, la connexion est obtenue par des moyens à baïonnette. Par exemple, le dispositif est approché axialement de la bride d'isolateur 18 l'axe X et l'axe X1 sont sensiblement colinéaires, puis le boîtier du dispositif est pivoté autour de l'axe X, assurant un verrouillage axial du boîtier 36 sur la bride d'isolateur 18. Puisque le joint gonflable 48 ne fait pas saillie de la gorge 46, il ne frotte pas sur la bride d'isolateur 18, ce qui réduit les frottements facilitant le montage et réduit les risques d'endommagement du joint, par exemple les risques de perçage de celui-ci (figure 2B).

Ensuite, le joint gonflable 48 est gonflé et vient en contact avec la face extérieure 18.1 de la bride d'isolateur 18 et assure un contact étanche dans la gorge 46 et sur la face extérieure 18.1. La pression dans le joint est avantageusement surveillée (figure 2C). Le boîtier et le joint gonflable 48 définissent avec la partie alpha un volume V dont on va vérifier l'étanchéité vis-à-vis de l'intérieur de l'isolateur. Les moyens de contrôle 58 sont activés. Une certaine pression est établie dans la cavité 38 et l'évolution de sa valeur est suivie. Le volume V est typiquement de quelques cm³.

Si la valeur de la pression dans la cavité 38 évolue, il est considéré qu'une ou des fuites existe(nt) entre le joint et la porte d'isolateur 22 et/ou la bride 18. Un signal prévient l'opérateur si le test d'étanchéité est positif ou négatif.

Lors d'un test d'étanchéité, le joint gonflable 48 est par exemple gonflé à une pression maximale de l'ordre de 2.10⁵ Pa et la pression dans la cavité est abaissée par exemple à environ - 4000 Pa par rapport à l'extérieur.

Le dispositif D1 selon l'invention permet de réaliser des tests plus fiables.

En effet, le joint gonflable est plus souple qu'un joint torique. Il vient épouser la surface d'appui de la bride d'isolateur au fur et à mesure de son gonflage. En cas de défauts sur la surface d'appui, par exemple une entaille ou un enfoncement, le joint gonflable s'adapte et compense les défauts de surface dans une certaine mesure. Ainsi les risques de faux résultats négatifs dus à un défaut d'étanchéité entre le dispositif de test et la partie alpha sont fortement réduits.

En outre, le dispositif de test est plus robuste, le joint gonflable étant protégé dans la gorge et les risques de choc, coups, rayures, entailles, préjudiciables au test d'étanchéité sont réduits.

La mise en oeuvre d'un joint gonflable a en outre l'avantage de présenter une surface de contact plus grande et donc une surface d'étanchéité plus grande que celle d'un joint torique.

Le montage du dispositif de test est rapide et relativement simple. Les risques de tests erronés sont sensiblement réduits.

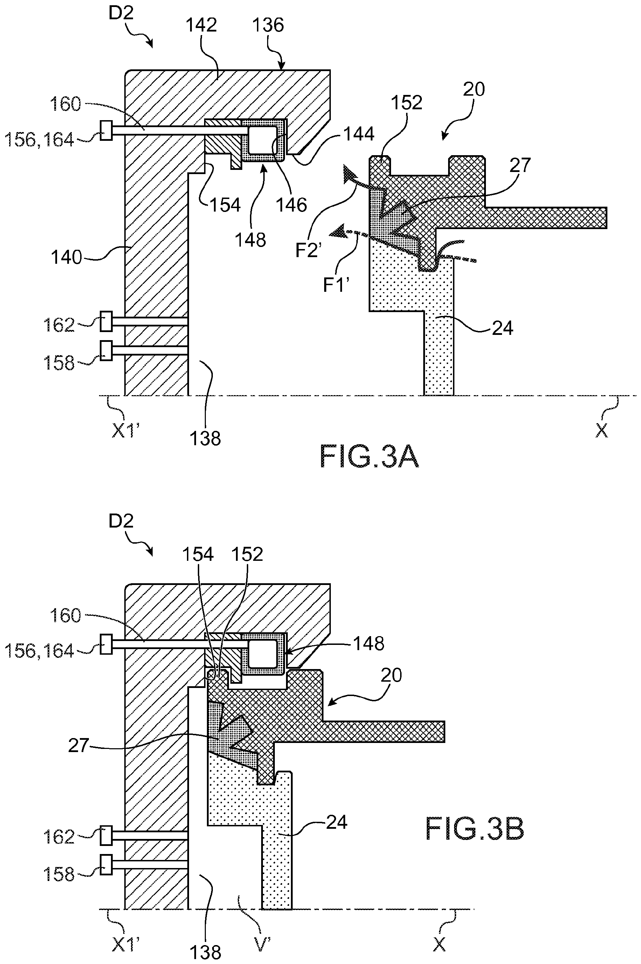

Sur les figures 3A à 3C, on peut voir un dispositif de test d'étanchéité D2 spécialement adapté au test d'étanchéité d'une partie bêta. La bride de conteneur 20 comporte un joint 27 similaire au joint 23 monté sur la porte d'isolateur 22.

Le dispositif D2 est très proche du dispositif D1 en ce qu'il met également en oeuvre un joint gonflable pour délimiter une cavité étanche avec la partie bêta. Il diffère du dispositif D1 par le fait que le joint gonflable 148 vient en contact avec la périphérie radialement extérieure de la bride de conteneur 20. Le dispositif D2 présente un axe longitudinal X1'.

Le boîtier 136 comporte une cavité 138 délimitée par un fond 140 et une paroi latérale 142, une ouverture 144 de diamètre inférieure au diamètre intérieur de la cavité de sorte à délimiter une gorge radiale 146 dans le boîtier logeant le joint gonflable 148.

Par exemple, le joint gonflable 148 est collé par sa face opposée à la face destinée à s'expanser. Le joint gonflable 148 est collé au fond de la gorge radiale 146. Les exemples de matériaux donnés pour le joint 48 s'appliquent au joint 148.

De manière avantageuse, l'ouverture 144 a un bord radialement intérieur chanfreiné facilitant le montage du boîtier sur la partie bêta.

Le montage du dispositif sur la partie bêta est tel qu'un jeu est laissé entre la face libre de la partie bêta et le fond 140 de la cavité 138 de sorte à ménager un volume de test V' entre la partie bêta et le dispositif et éviter de venir obturer les zones de fuites potentielles F1' et F2'. Le volume V' est typiquement de quelques cm³.

Dans l'exemple représenté sur les figures 3A à 3C, le dispositif de test D2 est configuré pour se connecter à une partie bêta par une connexion de type baïonnette. Dans cet exemple, le dispositif D2 comporte des oreilles 152 disposées dans la gorge radiale 146 entre le fond de la cavité 138 et le joint 148 et venant coopérer avec le bord périphérique extérieur de la bride de conteneur 20.

En variante, les moyens de connexion mécanique peuvent être de type à encliquetage, par vissage...

Comme le dispositif D1, le dispositif D2 peut comporter également des moyens 156 pour gonfler le joint gonflable148.

Les moyens 156 comportent une connexion fluidique 160 entre le joint gonflable 148 et par exemple une pompe pneumatique. De manière très avantageuse, les moyens 156 comportent des moyens de surveillance 164 pour surveiller la pression dans le joint gonflable 148 par rapport à une consigne prédéfinie, permettant de vérifier son état et/ou le montage du dispositif sur la bride de conteneur 20.

Par exemple les moyens de surveillance 164 comportent un pressostat. Le pressostat contrôle une perte de pression. La consigne prédéfinie correspond à la valeur de pression de gonflage du joint qui a été préalablement fixée. Le pressostat compare la consigne prédéfinie et la mesure réelle de pression du joint. Lorsque cet écart consigne / mesure dépasse un seuil ; par exemple si le joint est percé, le pressostat envoie un signal, par exemple une alarme sous forme de voyant lumineux. Ainsi il est possible de vérifier si la pression reste stable pendant toute la durée du test et que les conditions du test sont valides. Lors du gonflage, le pressostat commande l'arrêt de la pompe quand la pression de gonflage du joint est atteinte.

Le dispositif D2 comporte par exemple une pompe 162 pour générer un certain niveau de pression dans la cavité étanche et des moyens 158 pour surveiller l'évolution du niveau de pression au cours du temps dans la cavité 138 et assurer le test d'étanchéité, associés à des moyens pour informer l'opérateur de l'évolution de la pression sous la forme d'un écran ou d'un signal lumineux dont la couleur varie suivant qu'une fuite a été détectée ou non.

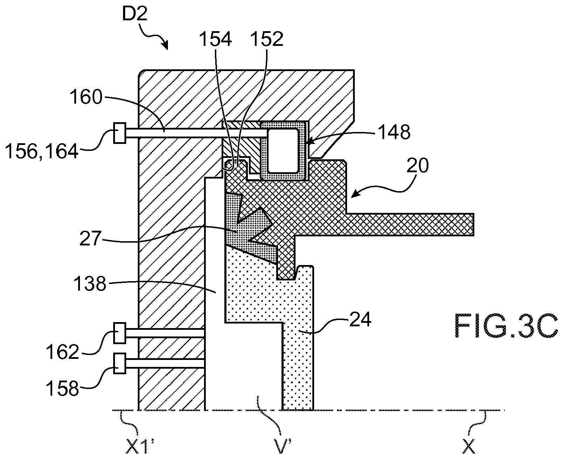

Le test d'étanchéité de la partie bêta avec le dispositif D2 se déroule sensiblement de la même manière que le test d'étanchéité de la partie alpha avec le dispositif D1. Le dispositif D2 est verrouillé sur la partie bêta (figure 3B), le joint gonflable 148 est gonflé (figure 3C) délimitant un volume V' dont la pression est contrôlée.

Dans cet exemple de réalisation du dispositif D2, le joint vient en contact avec une surface d'appui logée au fond d'une gorge qui est relativement protégée des chocs éventuels que peut subir un conteneur lors de sa manipulation. En outre il s'agit d'une surface usinée qui présente donc un bon état de surface et la surface est large relativement à la surface de la bride contre laquelle les dispositifs de test de l'état de la technique viennent en contact. Les risques d'une mauvaise étanchéité entre la bride de la partie bêta et le joint gonflable pendant le test sont sensiblement réduits.

Néanmoins, en variante, le dispositif D2 peut être configuré pour que le joint gonflable vienne en contact avec la face avant de la bride, en utilisant une bride de conteneur de surface plus grande. Il peut alors être envisagé que le dispositif de test d'étanchéité de la partie alpha soit également utilisé pour tester l'étanchéité de la partie bêta.

Dans les exemples décrits, la connexion entre le dispositif de test et la partie alpha ou la partie bêta est obtenue par des moyens de type baïonnette, qui sont les moyens de verrouillage des brides d'isolateur et conteneur l'une avec l'autre.

D'une part, le dispositif de test peut être fixé sur la partie à tester par des moyens différents de ceux permettant la connexion entre les deux brides, néanmoins cela complexifie notamment les parties bêta et/ou alpha. Par exemple le dispositif peut être fixé sur la partie à tester par des vis, par un système à levier, par encliquetage.

D'autre part, les brides peuvent être verrouillées l'une à l'autre par d'autres moyens que des moyens de type baïonnette, par exemple de moyens à levier, à came... En outre ces moyens peuvent coopérer avec le dispositif de test pour assurer sa fixation.

Le fait d'utiliser, pour fixer le dispositif de test sur la partie à tester, les moyens mis en oeuvre pour verrouiller les deux brides l'une avec l'autre présente l'avantage d'éviter à l'opérateur d'avoir à manipuler différentes techniques de verrouillage/fixation ce qui réduit les risques de mauvaise manipulation.

## Revendications

1. Dispositif de test d'étanchéité d'au moins une partie d'un système de transfert étanche à double porte entre deux volumes clos, ledit système comprenant de première et deuxième brides (18, 20) aptes à être solidarisées l'une à l'autre, et des première et deuxième portes (22, 24) obturant normalement des ouvertures délimitées respectivement par la première et la deuxième brides, le dispositif de teste d'étanchéité étant configuré pour tester séparément l'étanchéité entre la première bride et la première porte et entre la deuxième bride et la deuxième porte, ledit dispositif comportant un boîtier (36, 136) comprenant une cavité (38, 138) munie d'une ouverture (44, 144), des moyens de connexion mécanique (50) à au moins l'une des première (18) et deuxième (20) brides de sorte que la cavité (38, 138) soit fermée par l'une des première (18) et deuxième (20) brides et l'une des première (22) et deuxième (24) portes, ledit dispositif étant **caractérisé par** un joint gonflable (48, 148) destiné à venir, à l'état gonflé, en contact avec l'une des première (18) et deuxième (20) brides et à assurer une étanchéité permettant de vérifier l'étanchéité entre la première bride (18) et la première porte (22) ou la deuxième bride (20) et la deuxième porte (24).

2. Dispositif de test d'étanchéité selon la revendication 1, comportant des moyens (56) pour gonfler le joint gonflable (48) et des moyens (58) pour contrôler la pression dans la cavité (38).

3. Dispositif de test d'étanchéité selon la revendication 1 ou 2, dans lequel le boîtier (36) comporte une gorge (46) bordant l'ouverture (44) de la cavité (38) et recevant le joint gonflable (48).

4. Dispositif de test d'étanchéité selon la revendication précédente, dans lequel le joint gonflable (48), à l'état dégonflé, est logé entièrement dans la gorge (46).

5. Dispositif de test d'étanchéité selon l'une des revendications précédentes en combinaison avec la revendication 2, comportant un pressostat (64) pour surveiller la pression dans le joint gonflable (48).

6. Dispositif de test d'étanchéité selon l'une des revendications précédentes, dans lequel les première et deuxième brides du système de transfert comportent des moyens de verrouillage l'une à l'autre, et dans lequel les moyens de connexion mécanique (50) coopèrent avec les moyens de verrouillage de l'une au moins des première (18) et deuxième (20) brides.

7. Dispositif de test d'étanchéité selon la revendication précédente, dans lequel les moyens de connexion mécanique (50) sont de type à baïonnette.

8. Dispositif de test d'étanchéité selon l'une des revendications précédentes en combinaison avec la revendication 3 ou 4, dans lequel la gorge (46) débouche dans une face du boîtier (36) de sorte que le joint gonflable (48), à l'état gonflé, vienne en contact avec une face de la première (18) ou deuxième (20) bride sensiblement parallèle à la face de la première (22) ou deuxième (24) porte.

9. Dispositif de test d'étanchéité selon l'une des revendications 1 à 7 en combinaison avec la revendication 3 ou 4, dans lequel la gorge (146) débouche dans la cavité (138) du boîtier (136) de sorte que le joint gonflable (148), à l'état gonflé, vienne en contact avec la périphérie radialement extérieure de la deuxième bride (20).

10. Dispositif de test d'étanchéité selon l'une des revendications 1 à 9, dans lequel la première bride (18) et la première porte (22) sont celles d'un isolateur et dans lequel la deuxième bride (20) et la deuxième porte (24) sont celles d'un conteneur.

11. Procédé de test d'étanchéité d'au moins une partie d'un système de transfert étanche à double porte entre deux volumes clos mettant en oeuvre un dispositif de test d'étanchéité selon l'une des revendications précédentes en combinaison avec la revendication 2, la première bride et la deuxième bride étant désolidarisées l'une de l'autre, ledit procédé comprenant les phases suivantes :
- Connexion mécanique du dispositif de test d'étanchéité sur la première ou deuxième bride.
- Gonflage du joint gonflable à une pression donnée.
- Cycle de contrôle de pression dans la cavité.
- Emission d'un message sur l'étanchéité entre la première bride et la première porte ou la deuxième bride et la deuxième porte.

12. Procédé de test d'étanchéité selon la revendication 11, comportant une étape de surveillance de la pression dans le joint gonflable pendant toute la durée du test.

## Patentansprüche

1. Dichtigkeitsprüfvorrichtung für mindestens einen Teil eines abgedichteten Doppeltür-Transfersystems zwischen zwei geschlossenen Volumina, wobei das System einen ersten und einen zweiten Flansch (18, 20), die so ausgelegt sind, dass sie aneinander befestigt werden können, und eine erste und eine zweite Tür (22, 24) umfasst, die normalerweise Öffnungen verschließen, die jeweils durch den ersten und den zweiten Flansch begrenzt sind, wobei die Dichtigkeitsprüfvorrichtung so konfiguriert ist, dass sie die Dichtigkeit zwischen dem ersten Flansch und der ersten Tür und zwischen dem zweiten Flansch und der zweiten Tür separat prüft, wobei die Vorrichtung ein Gehäuse (36, 136) enthält, das einen Hohlraum (38, 138), der mit einer Öffnung (44, 144) versehen ist, und ein mechanisches Verbindungsmittel (50) zu mindestens einem des ersten (18) und des zweiten (20) Flansches umfasst, so dass der Hohlraum (38, 138) von einem des ersten (18) und des zweiten (20) Flansches und einer der ersten (22) und der zweiten (24) Tür verschlossen wird,
wobei die Vorrichtung **gekennzeichnet ist durch** eine aufblasbare Dichtung (48, 148), die dazu bestimmt ist, im aufgeblasenen Zustand mit einem des ersten (18) und des zweiten (20) Flansches in Kontakt zu kommen und eine Dichtigkeit zu gewährleisten, die es ermöglicht, die Dichtigkeit zwischen dem ersten Flansch (18) und der ersten Tür (22) oder dem zweiten Flansch (20) und der zweiten Tür (24) zu überprüfen.

2. Dichtigkeitsprüfvorrichtung nach Anspruch 1, umfassend ein Mittel (56) zum Aufblasen der aufblasbaren Dichtung (48) und ein Mittel (58) zum Steuern des Drucks in dem Hohlraum (38).

3. Dichtigkeitsprüfvorrichtung nach Anspruch 1 oder 2, bei der das Gehäuse (36) eine Vertiefung (46) aufweist, die an die Öffnung (44) des Hohlraums (38) angrenzt und die aufblasbare Dichtung (48) aufnimmt.

4. Dichtigkeitsprüfvorrichtung nach dem vorhergehenden Anspruch, bei der die aufblasbare Dichtung (48) im entleerten Zustand vollständig in der Vertiefung (46) untergebracht ist.

5. Dichtigkeitsprüfvorrichtung nach einem der vorhergehenden Ansprüche in Kombination mit Anspruch 2, umfassend einen Druckschalter (64) zum Überwachen des Drucks in der aufblasbaren Dichtung (48).

6. Dichtigkeitsprüfvorrichtung nach einem der vorhergehenden Ansprüche, bei der der erste und der zweite Flansch des Transfersystems ein Mittel zum Verriegeln miteinander umfassen und bei der das mechanische Verbindungsmittel (50) mit dem Verriegelungsmittel von mindestens einem des ersten (18) und des zweiten (20) Flansches zusammenwirkt.

7. Dichtigkeitsprüfvorrichtung nach dem vorhergehenden Anspruch, bei der das mechanische Verbindungsmittel (50) vom Bajonett-Typ ist.

8. Dichtigkeitsprüfvorrichtung nach einem der vorhergehenden Ansprüche in Kombination mit Anspruch 3 oder 4, bei der die Vertiefung (46) in eine Fläche des Gehäuses (36) mündet, so dass die aufblasbare Dichtung (48) im aufgeblasenen Zustand mit einer Fläche des ersten (18) oder des zweiten (20) Flansches in Kontakt kommt, die im Wesentlichen parallel zur Fläche der ersten (22) oder der zweiten (24) Tür ist.

9. Dichtigkeitsprüfvorrichtung nach einem der Ansprüche 1 bis 7 in Kombination mit Anspruch 3 oder 4, wobei die Vertiefung (146) in den Hohlraum (138) des Gehäuses (136) mündet, so dass die aufblasbare Dichtung (148) im aufgeblasenen Zustand mit dem radial äußeren Umfang des zweiten Flansches (20) in Kontakt kommt.

10. Dichtigkeitsprüfvorrichtung nach einem der Ansprüche 1 bis 9, bei der der erste Flansch (18) und die erste Tür (22) solche einer Isolierung sind und bei der der zweite Flansch (20) und die zweite Tür (24) solche eines Behälters sind.

11. Dichtigkeitsprüfverfahren für mindestens eines Teils eines abgedichteten Doppeltür-Transfersystems zwischen zwei geschlossenen Volumina, das durch eine Dichtigkeitsprüfvorrichtung nach einem der vorhergehenden Ansprüche in Kombination mit dem Anspruch 2 durchgeführt wird, wobei der erste Flansch und der zweite Flansch voneinander getrennt sind, wobei das Verfahren die folgenden Phasen umfasst:
- mechanisches Verbinden der Dichtigkeitsprüfvorrichtung mit dem ersten oder dem zweiten Flansch.
- Aufblasen der aufblasbaren Dichtung mit einem bestimmten Druck.
- Steuerzyklus des Drucks im Hohlraum.
- Aussenden einer Meldung über die Dichtigkeit zwischen dem ersten Flansch und der ersten Tür oder dem zweiten Flansch und der zweiten Tür.

12. Dichtigkeitsprüfverfahren nach Anspruch 11, umfassend einen Schritt des Überwachens des Drucks in der aufblasbaren Dichtung während der gesamten Prüfdauer.

## Claims

1. Sealing test device for testing sealing of at least a part of a double-door sealed transfer system between two closed volumes, said system comprising first and second flanges (18, 20) capable of being rigidly connected to one another, and first and second doors (22, 24) normally sealing openings respectively defined by the first and the second flanges, the seal-testing device being configured to separately test the sealing between the first flange and the first door and between the second flange and the second door, said device including a casing (36, 136) comprising a cavity (38, 138) provided with an opening (44, 144), means (50) for mechanical connection to at least one of the first (18) and second (20) flanges so that the cavity (38, 138) is closed by one of the first (18) and second (20) flanges and one of the first (22) and second (24) doors, said device being **characterized in that** it comprises an inflatable joint (48, 148) intended to come, in the inflated state, in contact with one of the first (18) and second (20) flanges and to ensure a sealing allowing to verify the sealing between the first flange (18) and the first door (22) or the second flange (20) and the second door (24).

2. Seal-testing device according to claim 1, including means (56) for inflating the inflatable joint (48) and means (58) for controlling the pressure in the cavity (38).

3. Seal-testing device according to claim 1 or 2, wherein the casing (36) includes a groove (46) bordering the opening (44) of the cavity (38) and receiving the inflatable joint (48).

4. Seal-testing device according to the previous claim, wherein the inflatable joint (48), in the deflated state, is housed entirely in the groove (46).

5. Seal-testing device according to one of the previous claims in combination with claim 2, including a pressure switch (64) to monitor the pressure in the inflatable joint (48).

6. Seal-testing device according to one of the previous claims, wherein the first and second flanges of the transfer system include means for locking to one another, and wherein the mechanical connection means (50) advantageously cooperate with the locking means of at least one out of the first (18) and second (20) flanges.

7. Seal-testing device according to the previous claim, wherein the mechanical connection means (50) are of the bayonet type.

8. Seal-testing device according to one of the previous claims in combination with claim 3 or 4, wherein the groove (46) opens into a face of the casing (36) so that the inflatable joint (48), in the inflated state, comes in contact with a face of the first (18) or second (20) flange substantially parallel to the face of the first (22) or second (24) door.

9. Seal-testing device according to one of claims 1 to 7 in combination with claim 3 or 4, wherein the groove (146) opens into the cavity (138) of the casing (136) so that the inflatable joint (148), in the inflated state, comes in contact with the radially outer periphery of the second flange (20).

10. Seal-testing device according to one of claims 1 to 9, wherein the first flange (18) and the first door (22) are those of an insulator and wherein the second flange (20) and the second door (24) are those of a container.

11. Method for testing sealing of at least a part of a double-door sealed transfer system between two closed volumes implementing a device for testing sealing according to one of the previous claims in combination with claim 2, the first flange and the second flange being disconnected from one another, said method comprising the following phases:
- Mechanically connecting the device for testing sealing onto the first or second flange.
- Inflating the inflatable joint to a given pressure.
- Cycle of controlling pressure in the cavity.
- Emitting a message on the sealing between the first flange and the first door or the second flange and the second door.

12. Seal-testing method according to claim 11, including a step of monitoring the pressure in the inflatable joint throughout the duration of the test.
